(19) Europäisches Patentamt
European Patent Office
Office européen des brevets

(11) Publication number: **0 098 976**
**A2**

(12) # EUROPEAN PATENT APPLICATION

(21) Application number: 83105701.3

(22) Date of filing: 10.06.83

(51) Int. Cl.³: C 09 K 11/44

(30) Priority: 14.07.82 US 398123

(43) Date of publication of application: 25.01.84 Bulletin 84/4

(84) Designated Contracting States: DE FR GB

(71) Applicant: International Business Machines Corporation
Old Orchard Road
Armonk, N.Y. 10504(US)

(72) Inventor: Brownlow, James Merritt
37 Baron DeHirsh Road
Crompond New York 10517(US)

(72) Inventor: Chang, Ifay Fay
20 Brechenridge Road
Chappaqua New York 10514(US)

(74) Representative: Killgren, Neil Arthur et al,
IBM United Kingdom Patent Operations Hursley Park
Winchester, Hampshire, SO21 2JN(GB)

(54) **Fluorescent composition for cathode ray display.**

(57) A family of cadmium silicate phosphors doped with Mn,As and described by the compositions $Cd_aSi_bO_c$:Mn,As, and wherein $1 < a < 2$, $1.5 < b < 3$, and $3 < c < 7$. These phosphor compositions emit amber colour light having a colour which is represented by colour points in the Commission Internationale De l'Eclairage (CIE) standard chromaticity diagram having x-value and y-value within the ranges of $.500 < x < .625$, and $.375 < y < .500$, respectively, when excited by an electron beam. The described amber phosphors have long persistencies, long life, and a reasonably high efficiency. The inclusion of some zinc in partial substitution for cadmium in this family of phosphors introduces a green band thereby producing a colour shift which may also be desirable.

EP 0 098 976 A2

Croydon Printing Company Ltd.

# FLUORESCENT COMPOSITION FOR CATHODE RAY DISPLAY

This invention relates generally to fluorescent compositions, and more particularly to such a composition for service as a cathode ray tube phosphor.

Cathode ray tube display terminals of many varieties have found increasing applications in the office and at home. Many such terminals feature a cathode ray tube (CRT) with a green emitting phosphor. There has been an increased awareness and concern over human factors in display products by the general public and governmental regulatory bodies have expressed concerns over the effect on users of display characteristics such as flicker and colour.

Amber phosphors are known. However, existing amber phosphors commonly known as P12, P19, P26, P33, P38, and P41, etc., in the industry are all fluoride compositions which, although exhibiting long persistence, have short coulomb life. Two other orange emitting phosphors, P3-zinc berylium silicate:Mn and P25 - calcium silicate:Pb,Mn, unfortunately show only medium persistence and rather low efficiency.

Cadmium has been generally an essential element for a colour CRT phosphor. For instance, a copper and aluminium activated zinc cadmium sulfide phosphor has found wide applications in conventional colour television. However, this is necessarily a phosphor of relatively short persistence.

It is accordingly a principal object of the present invention to provide a fluorescent composition which permits the provision of an

improved CRT display by exhibiting a better combination of the characteristics of persistence, efficiency and colour than hitherto.

According to the invention there is provided a fluorescent composition comprising cadmium silicate doped with manganese (Mn) and arsenic (As), and described by the expression:

$$Cd_a\ Si_b\ O_c:Mn,As;$$

wherein Cd is cadmium, Si is silicon, and O is oxygen; and wherein a has a value from about 1 to 2, b has a value from about 1.5 to 3, and c has a value from about 3 to 7.

Preferably the phosphor is adapted to produce an amber emission represented by colour path in a CIE standard chromaticity diagram having x-value and y-value within the ranges of x from about .500 to about .625, and y from about .375 to about .500. For these characteristics a has a value of 2, b has a value of 1.5 and c has a value of 5.

The invention and the manner in which it may be put into effect will be better understood from the following detailed description when read in conjunction with the accompanying drawings, in which :

FIGURE 1 is the luminescence spectrum of a $Cd_2\ Si_{1.5}\ O_5$:Mn, As phosphor compound according to the present invention.

FIGURE 2 is a graphical representation showing the colour points of the $Cd_a\ Si_b\ O_c$:Mn, As phosphor compounds according to the present invention in the CIE standard chromaticity diagram.

## Best Mode for Carrying Out the Invention

A gradient method is preferred for making an amber phosphor made of cadmium silicate doped with manganese and arsenic according to the present invention. A very similar phosphor synthesis technique is described in a copending U. S. patent application S. N. 280,147, filed June 30, 1981, by the same inventors and assigned to the assignee of the present invention. The novel phosphor compounds synthesized using this method may be described by the general expression:

$$Cd_a\ Si_b\ O_c{:}Mn,\ As;$$

wherein Cd is cadmium, Si is silicon and O is oxygen; and wherein, a, has a value from about 1 to 2, b has a value from about 1.5 to 3, and c has a value from about 3 to 7.

The source of $SiO_2$ for forming this cadmium silicate compound may be a commercial silicic acid, such as Fisher A288, or A945, made by Fisher, Inc. It is preferred that the particles in the silicic acid having a diameter size larger than 3μm and smaller than 0.7-1.0μm be removed.

A mixture is prepared using the silicic acid and an acidic solution of $Mn\ SO_4 \cdot H_2O$, $As_2O_3$, $HNO_3$, $NH_4NO_3$ in water. After a second solution containing $H_2O_2$ and $NH_4OH$, or amonium carbonate, etc., is added to the mixture, a brown $Mn_2O_3H_2O$ precipitate is caused to form on each silicic acid particle.

The submicrometer size particles of cadmium oxide or cadmium carbonate are added to overcoat the brown Mn compound film precipitated on the silicic acid particles. It is important not to grind the particles formed thus far. Stirring in plastic jars is used.

The resulting product is dried by heating or freeze-drying. Heating can be provided at about 100° or above. The dried particles are then fired in wet nitrogen gas (with or without an added fraction of 1 or 2% of hydrogen gas) at about 1180° for six to forty minutes. The process of firing retains most of the manganese in the divalent state. Firing time must be long enough only to amalgamate or react all of the cadmium oxide particles into the silicic acid particles, since the longer the firing time the greater the loss in persistency.

The resulting powder of phosphor particles is of suitable fine particle size after firing, and thus it does not require any milling which should be avoided since it is damaging to the phosphor particles.

A preferred embodiment of the cadmium silicate phosphor according to the present invention and synthesized using the method described hereinabove is $Cd_2\ Si_{1.5}\ O_5:Mn_{0.015}\ As_{0.0012}$, or referred to as the C23 compound for short. The C23 compound has an amber color emission centered around 5800Å, and with a luminescence spectra as illustrated in FIG. 1. The color point representation of the C23 phosphor in the CIE standard chromaticity diagram is also illustrated in FIG. 2.

Experiments have been performed which show that the C23 phosphor has a substantially long lifetime. This amber color emitting phosphor shows a reasonable efficiency ranging from about 1.6% to 8%. This cadmium silicate phosphor according to the present invention has also been demonstrated to have good persistence ranging from 27 to 40 msec at the 10% point. Several other cadmium silicate phosphors according to the present invention notably C21A, B, C, D, and C22 of Table I have been tested with similar performance results as the C23 phosphor described hereinabove. It should be pointed out that phosphors C21A, B, C, and D all have the same composition indicated, but each have only minor differences in firing time and firing temperature. The inclusion of lead oxide has virtually no effect as illustrated by phosphor C22.

| Phosphor | Composition |
|---|---|
| C21A,B,C,D | $Cd_2Si_{2.5}O_7:Mn_{.015}As_{.0012}$ |
| C22 | $Cd_2Si_{1.5}O_5:Mn_{.015}As_{.0012}PbO_{.0015}$ |

TABLE I

The color points of these additional cadmium silicate phosphors in this family are also represented together with the C23 phosphor in the CIE standard chromaticity diagram of FIG. 2. The cadmium silicate phosphor in this family occupy the region within the ranges of approximately $.5000 < x < .625$, and $.375 < y < .500$ when excited by an electron beam.

While the present invention of a family cadmium silicate phosphor have been shown and described to contain only cadmium, silicon and oxygen, plus dopings of manganese and arsenic, maintaining some amount of zinc in the cadmium silicate phosphor will have a tendency to produce zinc cadmium silicate which can introduce a green band resulting in a color shift which may also be desirable. Table II contains a number of additional new phosphors further including some zinc in partial substitution for cadmium to illustrate this color shift.

| Phosphor | Composition | Color |
|---|---|---|
| CZ4 | $Cd_2Zn_0Si_{1.5}O_4{:}Mn_{.01}\ As_{.001}$ | amber |
| CZ5 | $Cd_{1.3}Zn_{.7}Si_{1.5}O_4{:}Mn_{.01}\ As_{.001}$ | amber |
| CZ6 | $Cd_{.9}Zn_{1.1}Si_{1.5}O_4{:}Mn_{.01}\ As_{.001}$ | orange-yellow |
| CZ7 | $Cd_{.6}Zn_{1.4}Si_{1.5}O_4{:}Mn_{.01}\ As_{.001}$ | yellow-green |
| CZ8 | $Cd_{.4}Zn_{1.6}Si_{1.5}O_4{:}Mn_{.01}\ As_{.001}$ | green |

TABLE II

Although a particular gradient method is described hereinabove in the making of the preferred embodiments, other synthesis methods may also be employed to produce the phosphor composition according to the present invention without deviating from the teachings of the present invention.

From the preceding detailed descriptions of the present invention, is is clear that cathode ray tubes having phosphors made in accordance with the teachings of the present invention, provide an amber color emission which may be more desirable, or more advantageous from a human factor vantage point. Such a family of amber color emitting phosphors may meet new cathode ray tube requirements which are not met by phosphors heretofore. In addition to the variations and modifications to applicants' disclosed family of phosphors which have been suggested, many other variations and modifications will be apparent to those skilled in the art, and accordingly, the scope of applicants' invention is not to be construed to be limited to the particular embodiments shown or suggested.

CLAIMS

1 A fluorescent composition comprising cadmium silicate doped with manganese (Mn) and arsenic (As), and described by the expression:

$$Cd_a\ Si_b\ O_c{:}Mn,As;$$

wherein Cd is cadmium, Si is silicon, and O is oxygen; and wherein a has a value from about 1 to 2, b has a value from about 1.5 to 3, and c has a value from about 3 to 7.

2 A composition claimed in claim 1 adapted to emit an amber colour represented by colour points in a CIE standard chromaticity diagram having x-value and Y-value within the ranges of x from about .500 to about .625, and y from about .375 to about .500, wherein a has a value of 2, b has a value of 1.5 and c has a value of 5.

3 A composition as claimed in claim 2 including zinc in partial substitution for cadmium to effect a colour shift.

4 A cathode ray tube provided with a fluorescent screen having thereon a colour emitting phosphor as claimed in any preceding claim.

FIG. 1

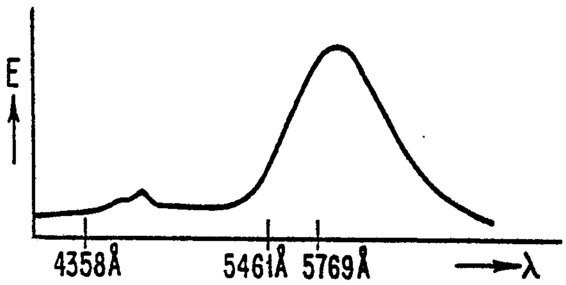
E
4358Å
5461Å
5769Å
λ

FIG. 2

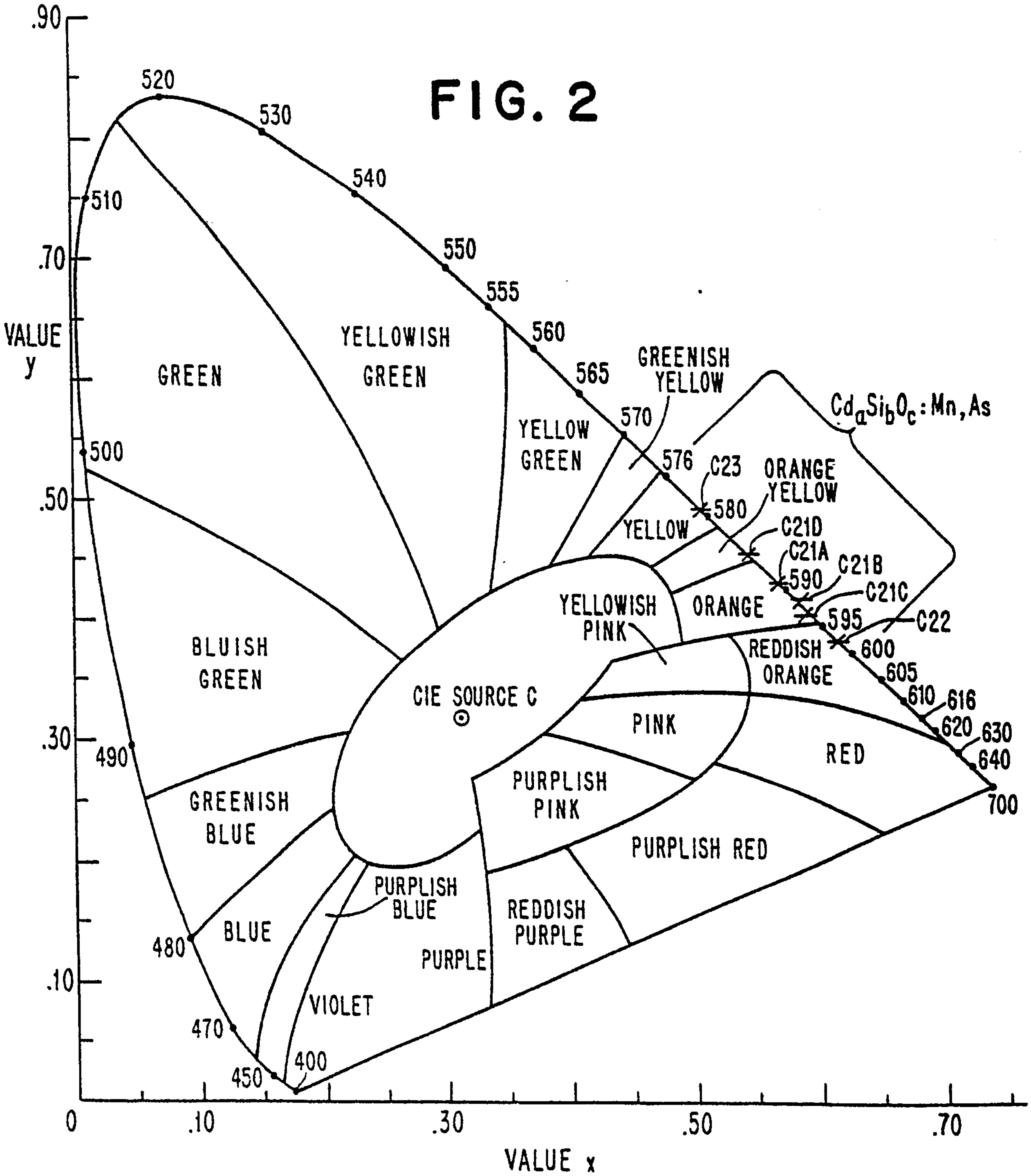
.90
.70
.50
.30
.10
VALUE
y
0
.10
.30
.50
.70
VALUE x
520
530
540
550
555
560
565
570
576
580
590
595
600
605
610
616
620
630
640
700
510
500
490
480
470
450
400
GREEN
YELLOWISH
GREEN
YELLOW
GREEN
GREENISH
YELLOW
$Cd_aSi_bO_c$:Mn,As
C23
ORANGE
YELLOW
YELLOW
C21D
C21A
C21B
C21C
C22
ORANGE
YELLOWISH
PINK
REDDISH
ORANGE
BLUISH
GREEN
CIE SOURCE C
PINK
RED
GREENISH
BLUE
PURPLISH
PINK
PURPLISH RED
PURPLISH
BLUE
BLUE
REDDISH
PURPLE
PURPLE
VIOLET